# EUROPÄISCHE PATENTSCHRIFT

(11) **EP 0 737 631 B1**
(45) Veröffentlichungstag und Bekanntmachung des Hinweises auf die Patenterteilung: **24.07.2002**
(21) Anmeldenummer: 96890061.3
(22) Anmeldetag: 29.03.1996
(51) Int. Cl.: B65G 1/04

(54) **Einrichtung zum Verteilen von Stückgut**
Distribution device for articles
Dispositif de distribution d'objets

(30) Priorität: 12.04.1995 AT 63595
(43) Veröffentlichungstag der Anmeldung: 16.10.1996
(73) Patentinhaber: P.E.E.M. Förderanlagen Ges.m.b.H., 8051 Graz (AT)
(72) Erfinder: Neukam, Helmut, Ing., 8071 Hausmannstätten (AT)
(74) Vertreter: Kliment, Peter, Dipl.-Ing.

(56) Entgegenhaltungen:
- FR-A- 2 364 832
- US-A- 3 492 704
- US-A- 5 238 349

## Beschreibung

Die Erfindung bezieht sich auf eine Einrichtung zum Verteilen von Stückgut gemäß dem Oberbegriff des unabhängigen Anspruches.

Eine derartige Einrichtung wurde z.B. durch die US 5 239 349 A bekannt.

Bei dieser bekannten Einrichtung ist die Auflagerebene der Transportvorrichtung für die Stückgüter soweit angehoben, daß diese über der Auflagerebene der Ausschubeinrichtung liegt, wobei die Ausschubeinrichtung ständig aktiviert ist und sich über die gesamte Länge der Transportvorrichtung erstreckt.

Wird im bekannten Fall die Position eines bestimmten Faches erreicht, in das ein Stückgut eingeschoben werden soll, so wird die Transportvorrichtung soweit abgesenkt, bis sich deren Auflagerebene für die Stückgüter unterhalb der durch die obersten Mantellinien der Rollen der Ausschubeinrichtung bestimmten Ebene befinden, wodurch das Stückgut in das betreffende Fach eingeschoben wird.

Dadurch ergeben sich jedoch erhebliche Nachteile. So muß während des Transports der Stückgüter die Transportvorrichtung ständig angehoben werden, damit sich deren Auflagerebene für die Stückgüter über jener der Ausschubeinrichtung befindet.

Da jede Rolle der Ausschubeinrichtung dieser bekannten Einrichtung über ein Zahnrad angetrieben wird, kann die Ausschubeinrichtung nur über die gesamte Länge der Transportvorrichtung wirksam werden. Somit ist es nicht möglich nur ein Warenstück von mehreren gleichzeitig auf der Transportvorrichtung befindlichen Warenstücken in eine Fach auszuschieben.

Ziel der Erfindung ist es, diese Nachteile zu vermeiden und eine Einrichtung der eingangs erwähnten Art vorzuschlagen, die sich durch einen einfachen Aufbau auszeichnet und ein rasches und gezieltes Einlagern von Waren auch bei einem geringen Abstand der einzulagernden Stückgüter auf der Transportvorrichtung ermöglicht.

Erfindungsgemäß wird dies bei einer Einrichtung der eingangs erwähnten Art durch die kennzeichnenden Merkmale des unabhängigen Anspruches erreicht.

Durch die vorgeschlagenen Maßnahmen ist es auf einfache Weise möglich einzelne auf der Transportvorrichtung befindliche Warenstücke in ein bestimmtes Fach eines Durchlaufregals einzuschieben. Dazu ist es lediglich erforderlich die dem betreffenden Fach zugeordnete Ausschubanordnung soweit anzuheben, daß die durch deren Riemen bestimmte Auflagerebene über jene der Transportvorrichtung liegt. Dabei ist es aber grundsätzlich auch möglich mehrere Fächer gleichzeitig durch entsprechendes Anheben der zugeordneten Ausschubanordnungen zu befüllen. Dabei ist es nicht unbedingt erforderlich die Transportvorrichtung anzuhalten.

Dadurch ist ein rasches Befüllen der einzelnen Fächer der Durchlaufregale möglich. Bei entsprechender Vorsortierung können die in einer bestimmten Etage angeordneten Fächer aufgefüllt werden und danach alle in einer nächsten Etage angeordneten Fächer.

Durch die Merkmale des Anspruches 2 ergibt sich eine in konstruktiver Hinsicht sehr einfache Lösung. Dabei ist durch die Verwendung eines dehnbaren Riemens der Vorteil einer einfachen Halterung des Antriebsmotors gegeben, wobei in der Arbeitsstellung des Trägers durch die erhöhte Spannung des Antriebsriemens die Sicherheit der Mitnahme der Querrollen erhöht wird und Schlupfprobleme vermieden werden.

Ausgehend von einer Einrichtung gemäß dem Oberbegriff des Anspruches 3 ist es vorteilhaft die kennzeichnenden Merkmale des Anspruches 3 vorzusehen.

Die Erfindung wird nun anhand der Zeichnung näher erläutert. Dabei zeigen:
- Fig. 1: schematisch einen Schnitt senkrecht zu einer Lagergasse eines Lagers mit einer erfindungsgemäßen Einrichtung,
- Fig. 2: schematisch einen Schnitt parallel zu einer Lagergasse eines Lagers mit einer erfindungsgemäßen Einrichtung,
- Fig. 3: einen Ausschnitt aus einer Rollenbahn mit einer Ausschubanordnung in axonometrischer Darstellung,
- Fig. 4: einen Schnitt durch eine Ausschubanordnung,
- Fig. 5: schematisch eine Einrichtung zur Beschickung einer erfindungsgemäßen Einrichtung,
- Fig. 6: schematisch eine Draufsicht auf eine Übernahmeeinrichtung.

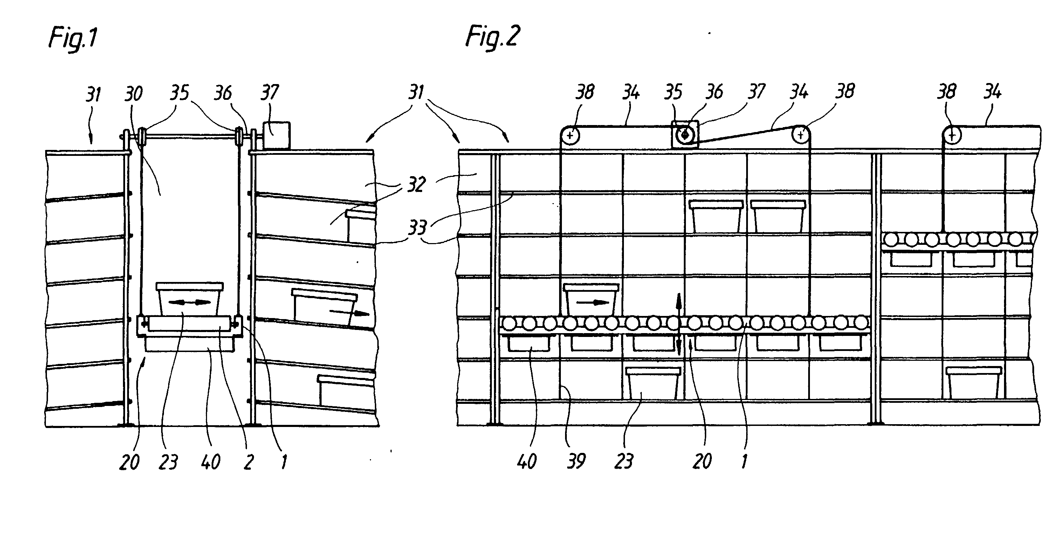

Bei einem Lager nach den Fig. 1 und 2 sind zu beiden Seiten einer Lagergasse 30 Durchlaufregale 31 angeordnet, die übereinanderliegende Fächer 32 zur Aufnahme von Stückgütern 23 aufweisen, wobei die Böden 33 der Fächer 32 von der Lagergasse 30 weg schräg geneigt abfallen.

In der Lagergasse 30 ist als Transporteinrichtung für die einzulagernden Stückgüter 23 eine Rollenbahn 20 angeordnet, die in ihren Endbereichen an Seilen 34 gehalten ist, die über oberhalb der Durchlaufregale 31 gehaltene Umlenkrollen 38 zu Seiltrommeln 35 geführt sind, die über eine gemeinsame Welle 36 mit einem Antrieb 37 verbunden sind. Die vertikalen Abschnitte der Seile 34 verlaufen dabei, wie aus der Fig. 2 zu ersehen ist, im wesentlichen vor den Seitenwänden 39 der übereinanderliegenden Fächer 32. Dadurch wird eine Behinderung des Einschiebens der Stückgüter 23 in die einzelnen Fächer durch die Seile 34 sicher verhindert.

Um mit einer relativ geringen Leistung des Antriebes 37 das Auslangen finden zu können, kann ein entsprechendes Gegengewicht vorgesehen sein, das über ein entsprechendes Seil ebenfalls an einer mit der gemeinsamen Welle 36 drehfest verbundenen Seiltrommel festgelegt ist und gegenläufig zur Rollenbahn 1 gehoben und abgesenkt wird.

Wie aus der Fig. 2 zu ersehen ist, sind an jeder Rollenbahn 20 im Bereich der übereinander angeordneten Fächer 32 Ausschubanordnungen 40 angeordnet, mit deren Hilfe aus einem sich auf der betreffenden Rollenbahn 20 bewegenden Strom von Stückgütern 23 ein einzelnes Stückgut 23 seitlich aus der Rollenbahn 20 ausgeschoben und dabei in ein Fach 32 eingeschoben werden kann. Dabei ist es auch möglich die Stücke von einer Rollenbahn 20 auf eine benachbarte Rollenbahn zu übergeben. Dazu ist es lediglich erforderlich, die beiden Rollenbahnen in eine gemeinsame Horizontalebene zu bringen, was durch entsprechende Steuerung der Antriebe 37 ohne weiteres erreichbar ist.

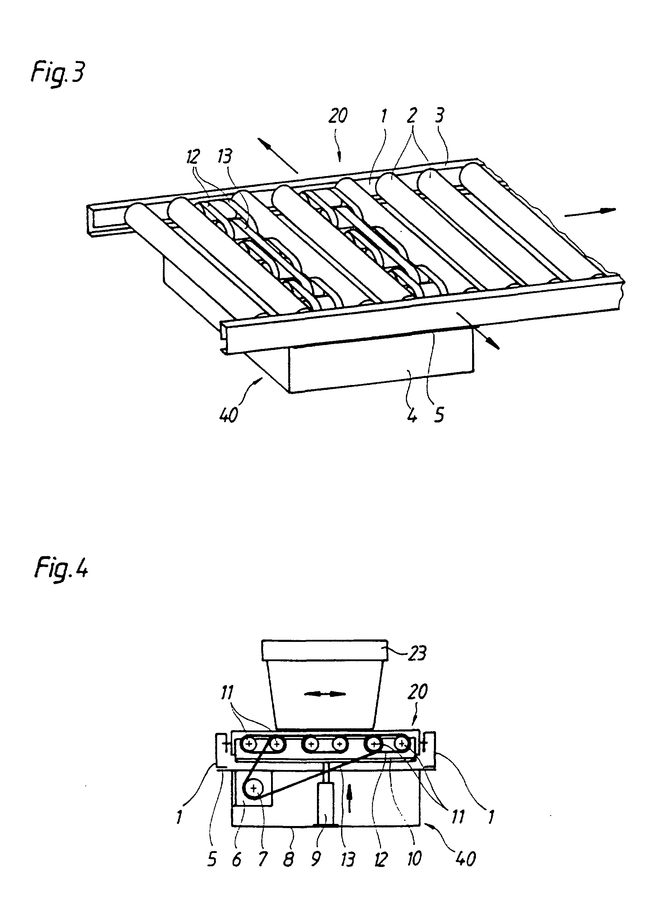

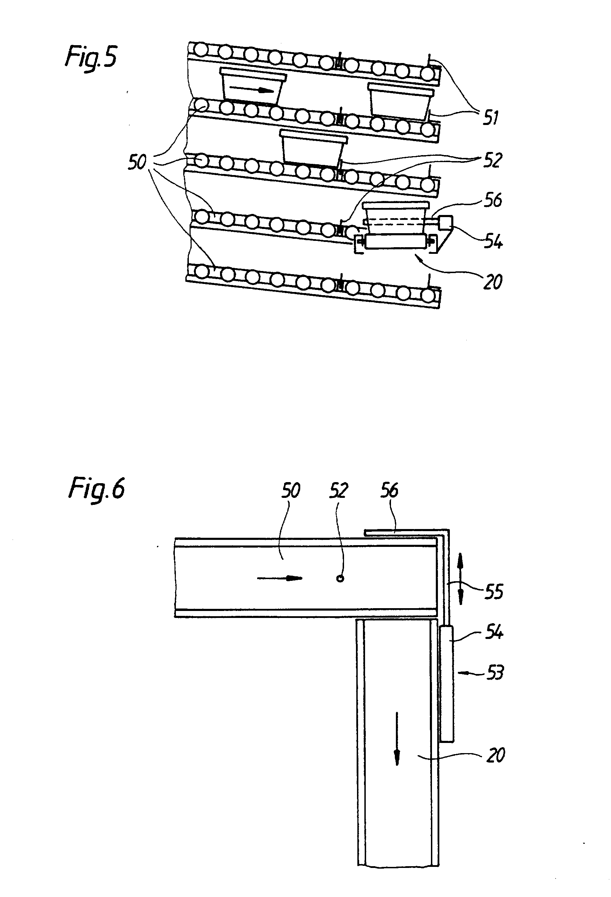

Die Beschickung der einzelnen Fächer der Durchlaufregale 31 erfolgt einfach in der Weise, daß die Stückgüter 23 auf die Rollenbahn 20, in der zumindest einige der Rollen 2 (Fig. 3, 4) antreibbar sind, aufgegeben werden und bei Erreichung des vorbestimmten Faches 32 mittels der Ausschubanordnung 40 in dieses aus- bzw. einzuschieben. Ein Beispiel einer Einrichtung zur Beschickung der Rollenbahn 20 ist in den Fig. 5 und 6 dargestellt.

Die Ausschubanordnungen 40 sind in den Fig. 3 und 4 näher dargestellt.

Eine Rollenbahn 20 (Fig. 3, 4) weist üblicherweise zwei Längsholme 1 auf, in denen in geringen Abständen Rollen 2 drehbar gelagert sind, wobei die obersten Mantellinien der Rollen 2 über die Oberseiten 3 der Längsholme 1 noch oben vorragen.

An der Unterseite der Längsholme 1 ist ein Gehäuse 4 der Ausschubanordnung 40 befestigt, das an seinen in Richtung der Längsholme verlaufenden Rändern mit nach außen gerichteten Abwinkelungen 5 versehen ist. Diese sind von aus Gründen einer besseren Übersichtlichkeit nicht dargestellten Schrauben durchsetzt, die in die Längsholme 1 eingreifen.

Wie insbesondere aus der Fig. 4 zu ersehen ist, ist im Gehäuse 4 ein Antriebsmotor 6 ortsfest gehalten, der mit einer Treibscheibe 7 versehen ist.

Weiters ist am Boden 8 des Gehäuses 4 ein durch eine Zylinder-Kolben-Einheit gebildete Hubeinrichtung 9 abgestützt, die einen Träger 10 vertikal verstellbar hält.

In diesem Träger 10, der parallel zu den Rollen 2 der Rollenbahn 20 verläuft, sind beim dargestellten Ausführungsbeispiel drei Paare von Querrollen 11 drehbar gehalten. Jedes Paar von Querrollen 11 ist von einem Paar von Schubriemen 12 umschlungen, die nahe den Stirnseiten, bzw. Enden der Querrollen 11 angeordnet sind.

Der Antrieb der Querrollen 11 erfolgt über einen dehnbaren Riemen 13 der über die Treibscheibe 7 des Motors 6, die näher der in Längsrichtung verlaufenden Mitte der Rollenbahn 20 liegenden Querrollen 11 der beiden äußeren Paare von Querrollen 11 und die beiden mittleren Querrollen 11 geführt ist. Dabei verläuft der dehnbare Riemen 13 zwischen den paarweise angeordneten Schubriemen 12.

Zum Ausschieben eines in einem Strom von mit geringem gegenseitigen Abstand auf der Rollenbahn 20 ankommenden Stückgutes 23 wird, sobald das Stückgut 23 in den Bereich der Ausschubanordnung 40 gelangt ist, der Hubantrieb 9 aktiviert und der Träger 10 angehoben, sodaß die obersten Mantellinien der Schubriemen 12 oberhalb der obersten Mantellinien der Rollen 2 verlaufen. Gleichzeitig wird der in seiner Drehrichtung umkehrbare Antriebsmotor 6 aktiviert und treibt über den dehnbaren Riemen 13 die Schubriemen 12 in der gewünschten Richtung an. Dadurch wird das nun auf den Schubriemen 12 liegende Stückgut 23 quer zur Förderrichtung der Rollenbahn 20 aus dieser ausgeschoben und in ein Fach 32 eines Durchgangsregales 31 eingeschoben.

Wie aus der Fig. 5 zu ersehen ist, sind im wesentlichen rechtwinkelig zu der im Bereich eines Endes einer Lagergasse 30 angeordneten heb- und senkbaren Rollenbahn 20 angeordneten mehrere Speicherbahnen 50 angeordnet, deren der Rollenbahn 20 zugekehrten Enden sich in den Höhenlagen der Fächer 31 des Lagers befinden. Diese gegen deren der Rollenbahn 20 zugekehrten Enden schräg nach unten abfallenden Speicherbahnen 50 können als Rollenbahnen ausgebildet sein, doch ist es auch möglich diese als einfache Rutschen auszubilden.

Die Beschickung der Speicherbahnen 50 kann mittels eines in seiner Neigung gegen die Horizontale veränderbares Förderband (nicht dargestellt) od. dgl. erfolgen.

An den Enden der Speicherbahnen 50 sind Anschläge 51 für die einzelnen zu lagernden Stücke vorgesehen. Weiters sind diesen Anschlägen 51 etwa um die Breite der Rollenbahn 20 vorgeordnete aus- und einfahrbare Stopper 52 vorgeordnet. Durch entsprechende Steuerung der Stopper 52 ist es möglich die zu lagernden Stücke einzelweise in zwischen dem jeweiligen Stopper 52 und dem Anschlag 51 liegenden Bereich gleiten, bzw. rutschen zu lassen.

Wie aus der Fig. 6 zu ersehen ist, ist im Bereich des den Speicherbahnen 50 zugekehrten Endes einer Rollenbahn 20 eine Übernahmeeinrichtung 53 an dieser befestigt. Eine solche Übernahmeeinrichtung 53 weist im wesentlichen eine Zylinder-Kolbenanordnung 54 auf, deren Kolbenstange 55 mit einem zu dieser senkrecht abstehenden Schieber 56 verbunden ist.

Mit diesem Schieber 56 kann ein einzulagerndes Stück von einer Speicherbahn 50 auf die heb- und senkbare Rollenbahn 20 geschoben und über diese, wie oben beschrieben, in ein entsprechendes Fach 32 des Lagers eingeschoben werden.

## Patentansprüche

1. Einrichtung zum Verteilen von Stückgut in eine Vielzahl von Fächer von in einer Lagergasse angeordneten Durchlaufregale, bei der eine in Richtung der Lagergasse fördernde, höhenverstellbar gehaltene Transportvorrichtung zum Transport der zu verteilenden Stückgüter, und eine quer zur Lagergasse fördernde Ausschubeinrichtung vorgesehen sind, die antreibbare Querrollen (11) aufweist, deren Achsen parallel zur Förderrichtung der Transportvorrichtung verlaufen, wobei die Querrollen (11), bzw. die durch deren oberste Mantellinien bestimmte Ebene, mittels eines Hubantriebes (9) über die durch die obersten Mantellinien der die Stückgüter tragenden Elemente der Transportvorrichtung bestimmte Auflagerebene anhebbar ist, **dadurch gekennzeichnet, daß** die Transportvorrichtung in an sich bekannter Weise durch eine Rollenbahn (20) gebildete ist, deren oberste Mantellinien über die Oberseite von Längsholmen (1) nach oben vorragen und die Ausschubeinrichtung eine der Anzahl der in einer Horizontalebene an einer Seite einer Lagergasse angeordneten Fächer entsprechende Anzahl von Ausschubanordnungen (40) aufweist, die einzeln mit Hubantrieben (9) gegenüber der Transportvorrichtung vertikal verstellbar gehalten sind und durch je drei Paare von in einem Träger (10) drehbar gehaltene Querrollen (11) gebildet sind, wobei je ein Paar endloser Schubriemen (12) über je zwei einander benachbarte Querrollen (11) geführt sind und die Querrollen (11) in Zwischenräume zwischen je zwei Rollen der Rollenbahn (20) eingreifen.

2. Einrichtung nach Anspruch 1, **dadurch gekennzeichnet, daß** jede Ausschubanordnung (40) in einem Gehäuse (4) gehalten ist, in dem ein Antrieb (6, 7) der Querrollen (11) angeordnet ist und ein dehnbarer Antriebsriemen (13) zwischen den Paaren von Schubriemen (12) über mindestens eine Querrolle (11) eines jeden Paares von Querrollen (11) geführt ist.

3. Einrichtung nach einem der Ansprüche 1 oder 2, bei der in einer Lagergasse (30) außer einer Rollenbahn (20) mindestens eine Speicherbahn (50), sowie eine Übernahmeeinrichtung (53) zum Aufschieben der einzelnen Stücke auf die Rollenbahn (20) vorgesehen sind, **dadurch gekennzeichnet, daß** eine Anordnung von in den Höhenlagen der Fächer (32) des Lagers angeordnete Speicherbahnen (50) vorgesehen sind, die der Rollenbahn (20) vorgeordnet sind, wobei die Übernahmeeinrichtung (53) an der den Speicherbahnen (50) zugekehrten Ende der Rollenbahn (20) angeordnet ist.

## Claims

1. A device for distributing piece goods to a plurality of compartments of flow racks disposed in a storage aisle, in which there are provided a conveying apparatus for the conveyance of the piece goods to be distributed, which apparatus is held height-adjustable and conveys in the direction of the storage aisle, and a push-out device which conveys transversally to the storage aisle and comprises drivable transversal rollers (11) whose axes extend parallel to the conveying direction of the conveying apparatus, with the transversal rollers (11), or the plane determined by their uppermost surface lines respectively, being liftable by means of a lifting drive (9) above the bearing plane as determined by the uppermost surface lines of the elements of the conveying apparatus which carry the piece goods, **characterized in that** the conveying apparatus is formed in the known manner by a roller conveyor (20) whose uppermost surface lines project upwardly beyond the upper side of longitudinal crossbeams (1) and the push-out device comprises a number of push-out arrangements (40) corresponding to the number of the compartments disposed in a horizontal plane at one side of a storage aisle, which push-out arrangements are held individually and perpendicularly adjustable with lifting drives (9) with respect to the conveying apparatus and are formed by three pairs each of transversal rollers (11) rotatably held in a support (10), with one pair each of continuous push belts (12) being guided over two mutually adjacent transversal rollers (11) each and the transversal rollers (11) engage into intermediate spaces between two rollers each of the roller conveyor (20).

2. A device as claimed in claim 1, **characterized in that** each push-out arrangement (40) is held in a housing (4) in which a drive (6, 7) of the transversal rollers (11) is arranged and an extensible push belt (13) is guided between the pairs of push belts (12) via at least one transversal roller (11) of each pair of transversal rollers (11).

3. A device as claimed in one of the claims 1 or 2, in which in a storage aisle (30) there are provided in addition to the roller conveyor (20) at least one storage conveyor (50) as well as a transfer device (53) for pushing up the individual pieces onto the roller conveyor (20), **characterized in that** an arrangement of storage conveyors (50) are provided at the height levels of the compartments (32) of the storehouse, which storage conveyors are provided upstream of the roller conveyor (20), with the transfer device (53) being disposed at the end of the roller conveyor (20) facing the storage conveyors (50).

## Revendications

1. Dispositif pour la distribution d'objets dans de multiples compartiments de rayonnages continus disposés dans une allée d'entrepôt, qui présente un mécanisme de transport réalisant un transport dans le sens de l'allée d'entrepôt et réglable en hauteur, destiné au transport des objets à distribuer, et un dispositif d'éjection transportant les objets perpendiculairement à l'allée d'entrepôt, qui présente des galets transversaux (11) pouvant être entraînés, dont les axes sont parallèles au sens de transport du mécanisme de transport, les galets transversaux (11) ou le plan défini par leurs lignes d'enveloppe supérieures pouvant être soulevés au moyen d'un entraînement de levage (9) au-dessus du plan de dépose défini par les lignes d'enveloppe supérieures des éléments du mécanisme de transport qui portent les objets, **caractérisé en ce que** le mécanisme de transport est formé, de manière connue en soi, par un convoyeur à rouleaux (20), dont les lignes d'enveloppe supérieures dépassent vers le haut au-dessus de la face supérieure de longerons (1), et le dispositif d'éjection comprend des systèmes d'éjection (40) dont le nombre correspond au nombre de compartiments disposés d'un côté d'une allée d'entrepôt dans un plan horizontal, lesquels peuvent être déplacés séparément à la verticale par rapport au mécanisme de transport par des entraînements de levage (9) et sont formés chacun par trois paires de galets transversaux (11) retenus avec possibilité de rotation dans un support (10), une paire de courroies de poussée sans fin (12) étant passée sur chaque paire de galets transversaux (11) voisins et les galets transversaux (11) se mettant en prise dans des interstices entre chaque paire de rouleaux du convoyeur à rouleaux (20).

2. Dispositif selon la revendication 1, **caractérisé en ce que** chaque système d'éjection (40) est logé dans un boîtier (4) dans lequel sont disposés un entraînement (6, 7) pour les galets transversaux (11) et une courroie d'entraînement extensible (13) est guidée entre les paires de courroies de poussée (12) par-dessus au moins un galet transversal (11) de chaque paire de galets transversaux (11).

3. Dispositif selon la revendication 1 ou 2, dans lequel il est prévu dans une allée d'entrepôt (30), outre un convoyeur à rouleaux (20), au moins un convoyeur de stockage (50), ainsi qu'un dispositif de prise (53) destiné à déplacer les différents objets sur le convoyeur à rouleaux (20), **caractérisé en ce qu'**il est prévu une disposition de convoyeurs à rouleaux (50) à la hauteur des compartiments (32) de l'entrepôt, le dispositif de prise (53) étant disposé à l'extrémité du convoyeur à rouleaux (20) tournée vers les convoyeurs de stockage (50).
